# EUROPEAN PATENT APPLICATION

(11) **EP 2 600 632 A1**
(43) Date of publication of application: **05.06.2013**
(21) Application number: 12167684.5
(22) Date of filing: 11.05.2012
(51) Int. Cl.: H04N 21/482, H04N 21/431

(54) **Program table control device and program table control method**

(30) Priority: 30.11.2011 JP 2011261650
(71) Applicant: Kabushiki Kaisha Toshiba, Tokyo 105-8001 (JP)
(72) Inventor: Matsukawa, Akiko, Tokyo, 105-8001 (JP); Tanaka, Masami, Tokyo, 105-8001 (JP)
(74) Representative: Henkel, Breuer & Partner

(57) **Abstract**

According to one embodiment, the table processing section processes a jump table (700) comprising a plurality of cells distinguished from each other based on date and time information which indicates a plurality of dates of the past, present and future and times thereof. The program information processing portion displays the jump table (700), and when an arbitrary one of the plurality of cells is selected by an operation means, outputs a program table (801) which indicates a program of the past, the future, the past and present, the present and future, or the past, present and future, associated with the arbitrary cell based on association data.

## Description

Embodiments described herein relate generally to a program table control device and a program table control method. Here, the name of "program table" is not limited to in this words, it may be referred to as a program chart, a program guide, or an electric program guide, etc.

A program recording device which can record all of the programs broadcasted on a plurality of channels over a plurality of days is commercially available. A user who is operating such a program recording device needs to select a program which the user wishes to view from a plurality of programs already recorded or a plurality of programs being presently recorded.

Here, if all of the programs broadcasted on a plurality of channels are recorded by the device over a plurality of days, the user have to search and select a TV program which the user wishes to view from an enormous number of programs. In order to manage a plurality of programs already recorded, there is a means which can create a list of recorded programs and display the list of recorded programs for the user to select a program. But in some cases, it is difficult to find out a program which the user wishes to view from the list of recorded programs, which manages the enormous number of programs.

In order to improve such inconveniency, there has been developed a means which designates a range of the display of the program table prior to the display of the program table based on the program data stored by the recording device. This means can display a menu for designating a date and time. When a date and time are designated on the date and time designation menu, the program table portion which corresponds to the date and time designated is displayed.

Here, referring to a program table, the user expects various ways of use. For example, the user may wish to confirm and view a program broadcasted in the past, to confirm and view a program being presently broadcasted, or to confirm a program to be broadcasted in the future, etc.

As a solution to the above, the object of the present embodiment is to provide a program table control device which easily displays program tables of the past, present and future in a simple way for the user to be able to easily search for program data which the user wishes to obtain, as well as such a program table control method.

A general architecture that implements the various features of the embodiments will now be described with reference to the drawings. The drawings and the associated descriptions are provided to illustrate the embodiments and not to limit the scope of the invention.
FIG. 1 is a block diagram showing an example of the system configuration of a program recording device according to this embodiment;
FIG. 2 is a diagram schematically showing an example of the re-multiplexing mode;
FIG. 3 is a diagram schematically showing an example of a data configuration of a program database section;
FIG. 4 is a diagram schematically showing an example of a data configuration of meta-data;
FIG. 5 is a diagram showing a front view of an example of a remote controller;
FIG. 6 is a diagram showing an example of a program table;
FIG. 7 is a diagram showing an example of a date and time designation jump table;
FIG. 8 is a conceptual diagram showing the relationship between the date and time designation jump table and a program table data file of the past, present and future, a part of which can be designated by the date and time designation jump table;
FIG. 9A is a diagram showing an example of a program table displayed by operating the date and time designation jump table;
FIG. 9B is a diagram showing another example of a program table displayed by operating the date and time designation jump table;
FIG. 10A is a diagram illustrating an indicator 801a displayed in addition to a program table;
FIG. 10B is a diagram illustrating an indicator 802a displayed in addition to a program table;
FIG. 10C is a diagram illustrating an indicator 700a displayed in addition to the date and time designation jump table;
FIG. 11 is a diagram showing an example of a program table displayed and containing program data from the past through the future, and an example of a pop-up image displayed when the view of a program is decided from the programs of the past through the future on the program table;
FIG. 12 is a diagram showing another example of a pop-up image displayed when the view of a program is decided from the programs of the past through the future on the program table;
FIG. 13 is a diagram showing a display example of the date and time designation jump table;
FIG. 14 is a diagram showing another display example of the date and time designation jump table;
FIG. 15 is a diagram showing another display example of the date and time designation jump table;
FIG. 16 is a diagram showing another display example of the date and time designation jump table;
FIG. 17 is a diagram showing an example of the destination of jump of a display area displayed by the date and time designation jump table;
FIG. 18 is a diagram showing another example of the destination of jump of a display area displayed by the date and time designation jump table;
FIG. 19 is a diagram showing another example of the destination of jump of a display area displayed by the date and time designation jump table;
FIG. 20 is a diagram showing a portion of operation keys of the remote controller; and
FIG. 21 is a flowchart of operations carried out mainly by a display processing section in this embodiment.

Various embodiments will be described hereinafter with reference to the accompanying drawings.

The present embodiment comprises: a table processing portion configured to process a jump table comprising a plurality of cells which distinguish dates and times based on date and time information which indicates a plurality of dates of the past, present and future and times thereof; and a program information processing portion configured to output a program table which indicates an arbitrary program(s) of the past, the future, the past and present, the present and future, or the past, present and future, associated with a cell.

The embodiment will now be described with reference to accompanying drawings. This embodiment may be a digital recorder as a program recording apparatus. This embodiment also may be a television apparatus equipped with a digital recorder as an integrated unit.

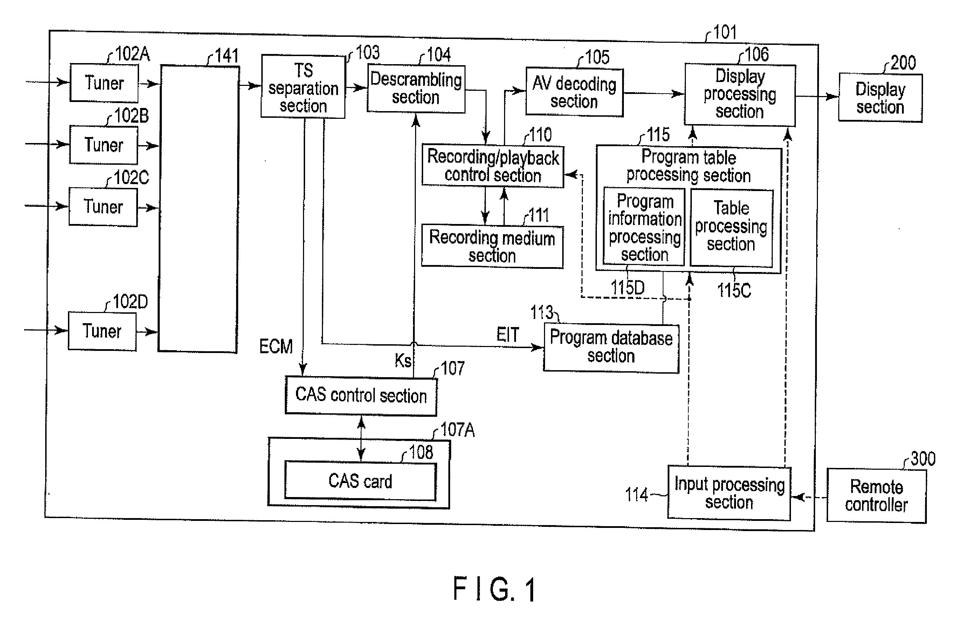

FIG. 1 is a block diagram showing the system configuration of a digital recorder 101 according to this embodiment. The digital recorder 101 of this embodiment will be described with reference to an example case where the recorder comprises 4 tuner modules each as a receiver configured to receive digital broadcasting signals which are scrambled (two modules being tuners 102A and 102B for receiving terrestrial digital television broadcast programs, the other two being tuners 102C, 102D and the like for receiving BS/CS digital television broadcast programs).

The signals of the broadcast programs received by the first tuner 102A, second tuner 102B, third tuner 102C and fourth tuner 102D are input to a TS re-multiplexing section 141 which functions as re-multiplexing section, where transport streams (TS) of these plurality of channels (CH) are re-multiplexed into a single TS.

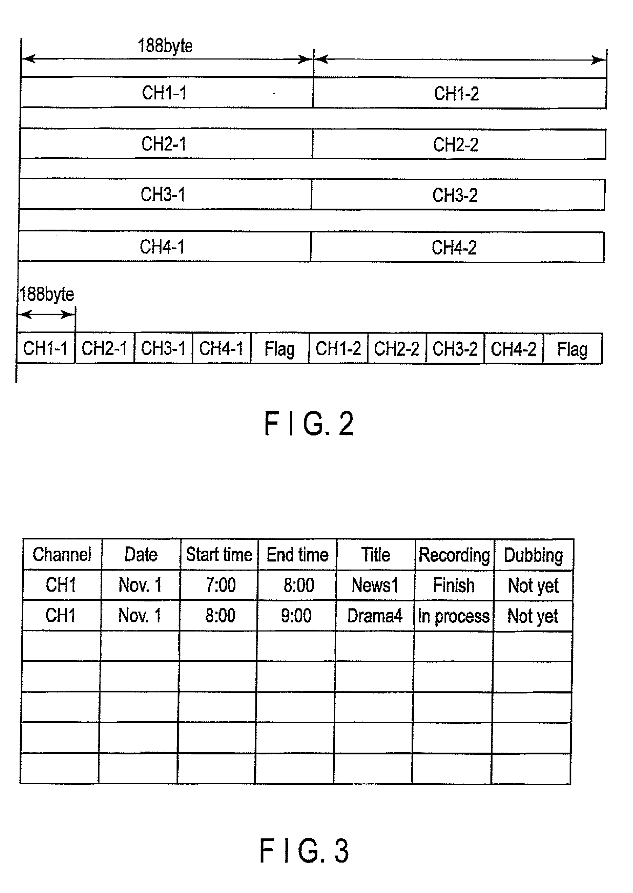

FIG. 2 shows an example of the mode of re-multiplexing carried out in the TS re-multiplexing section 141. In the case of 4CH input, as shown in FIG. 2, the sequences of the packets are re-multiplexed at a speed 5 times as fast as that of the input. Further, a Flag packet may be added into a packet sequence. Here, a mode in which, for example, time stamp data for each packet is added, is employed. In the TS re-multiplexing mode, the mode is not limited to that explained in this embodiment, but various modes can be employed. Signals re-multiplexed in the TS re-multiplexing section 141 are sent to a TS separation section 103.

The TS separation section 103 separates an entitlement control message (ECM), which is encryption data, and an event information table (EIT) in which event information including the titles of programs, cast and program start time are written, from the signals of a broadcast program.

The ECM separated by the TS separation section 103 is transferred to a CAS control section 107. The CAS control section 107 decodes the cipher of the ECM using a work key (Kw), and compares the attribute data regarding the program in the ECM with the contract information stored in a CAS module 108 to judge as to whether the program may be viewed. The work key (Kw) is set for each of broadcasting operators stored in the CAS module (which is a CAS card in the form of IC card: to be referred to as CAS card hereinafter where necessary) 108 inserted to the card slot (card interface I/F) 107A.

When the CAS control section 107 judges that the program may be viewed, it decodes its scramble key (Ks) and outputs the decoded key to a descrambler section 104. It should be noted here that the cipher keys Ks and Kw differ from one broadcast operator to another, but they are common keys in all receiver devices.

On the other hand, the EIT separated by the TS separator section 103 is input to a program database section 113. The program data base section 113 executes the formation of a database for creating a program table using the EIT.

FIG. 3 is a schematic diagram showing a data configuration of the program database section 113. As shown in FIG. 3, information including channel, date, start time of the program, end time, title, recording status (recording finished, recording in progress), whether or not dubbing is performed, are complied in a table for each of the programs.

The descrambler section 104 sets the scrambling key Ks replied from the CAS control section 107, and inputs the descrambled TS to a recording/playback control section 110.

The recording/playback control section 110 is configured to carry out such a control that TS for each channel is extracted from the re-multiplexed TS, and the extracted TS of each channel is recorded in a recording medium section 111 such as a hard disk drive (HDD). Further, the recording/playback control section 110 executes the control of reproducing a TS, which is the signal of a broadcast program recorded in the recording medium section 111, and outputs the reproduced TS to an AV decoding section 105. In other words, the recording/playback control section 110 can function as a recording control section as well as a playback control section.

The recording/playback control section 110 stores programs to be recorded for each channel as TS files in the recording medium section 111. The programs to be recorded are specified by designating conditions such as time zones and days of week in a plurality of channels. The recording/playback control section 110 is configured to continue to record the designated program while erasing the recorded programs sequentially from the one that has the oldest record time, when the recording capacity of the recording medium section 111 reaches its limit. Note that in the following descriptions, the program data in each TS file in the recording medium section 111 is referred to as past program.

Here, recording TS for each channel in the recording medium section 111, the recording/playback control section 110 creates meta-data which associate the recording location (physical address) in a physical region of the recording medium section 111, time data and program data with each other, for each channel, and records the created data in the recording medium section 111.

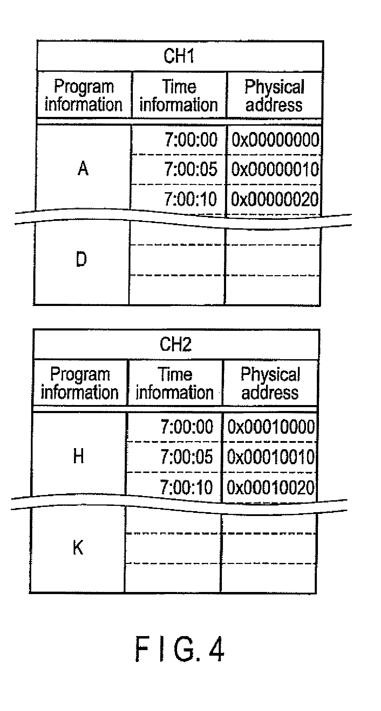

More specifically, as shown in FIG. 4, meta-data which are the recording location (physical address) in a physical region of the recording medium section 111, time data (indicating the relative time with reference to a reference time set to the record start location of the program) and program data with each other, for each channel, are created and recorded in the recording medium section 111.

In the example shown in FIG. 4, the recording location (physical address) is recorded every 5 seconds. It should be noted that the program information can be gotten from the EIT.

The recording medium section 111 may be, for example, an HDD, a disk drive, SD (registered tradename) card reader/writer, and records TS which is the signal of a broadcast program from the recording/playback control section 110. The recording medium section 111 needs not be a type built in the digital recorder 101, but may be a recording medium such as an HDD connected via USB, LAN or the like.

The AV decoding section 105 configured to decode the selected program signal into AV (audio and video) data. The selected program signal is one of signals of broadcast programs of the respective channels received by the respective tuners 102A, 102B, 102C and 102D (that is, a stream as a TS for each CH), or of a broadcast program reproduced by the recording/playback control section 110 (that is, a streams as a TS for each CH).

The decoded output (AV output) of AV data is output to a display section 200, which is an external monitor, via a display processing section 106. Further, the display processing section 106 has the function of GUI (Graphical User Interface) for presenting information to the users by OSD (On Screen Display) or the like. By the GUI function, the program table, etc., which will be later explained are displayed on the display section 200.

A program table processing section 115 receives the EIT of programs recorded in the recording medium section 111 and the EIT of programs broadcasted in the future, from the program data base section 113, and executes the process of creating a program table, and the process of creating data to display the program table on the display screen of the display section 200.

That is, the program table processing section 115 comprises a date and time designation jump table processing section (to be referred to simply as table processing section) 115C and a program information processing section 115D. The table processing section 115C can process the date and time designation jump table (, which may be referred to as jump table) comprising a plurality of cells which distinguish dates and times based on date and time information which indicates a plurality of dates of the past, present and future and the times thereof. The program information processing section 115D is configured to manage the display of the date and time designation jump table and to output a program table which indicates a program table containing program information of: (a) the past, (b) the present, (c) the future, (d) the past and present, (e) the present and future, or (f) the past, present and future, associated with an arbitrary number of cells based on the association data when the arbitrary number of cells are selected by operation means.

An input processing section 114 receives various types of operation inputs from the user. For example, the input processing section 114 receives entries from the user, including the display designation of the date and time designation jump table, the entries of the selection of a cell of a play-back program on the program table and designation thereof, the programming of automatic recording, the designation of a play-back program on the program table.

The input processing section 114 may be of a type which receives entries from the user via a section equivalent to a fixed operation panel (not shown) mounted to the digital recorder 101, or a type which receives entries from the user via a remote controller 300 separated from the digital recorder 101.

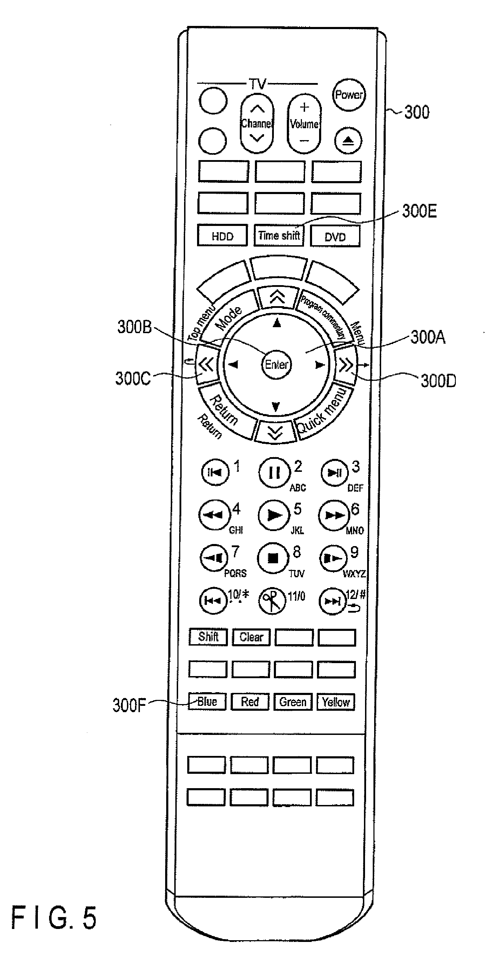

FIG. 5 shows an outer appearance of the remote controller 300. The remote controller 300 comprises, mainly, a cursor key 300A, an enter key 300B, a page backward key 300C, a page forward key 300D, a time shift key 300E, etc.

The cursor key 300A is provided to make a transition from a designated region to another (focus) in the program table, the date and time designation jump table, etc., later explained. The enter key 300B is provided to determine the designated region. The page backward key 300C, and page forward key 300D are provided to change a display region in the program table, the date and time designation jump table, etc.

The time shift key 300E is provided to display a program table which displays programs simultaneously recorded by the recording method. When the time shift key 300E is pressed down, the program information processing section 115D and the program table processing section 115 display the program table on the display screen of the display section 200. At this stage, the apparatus enters the so-called time shift mode by which a program designated from the display screen can be played back.

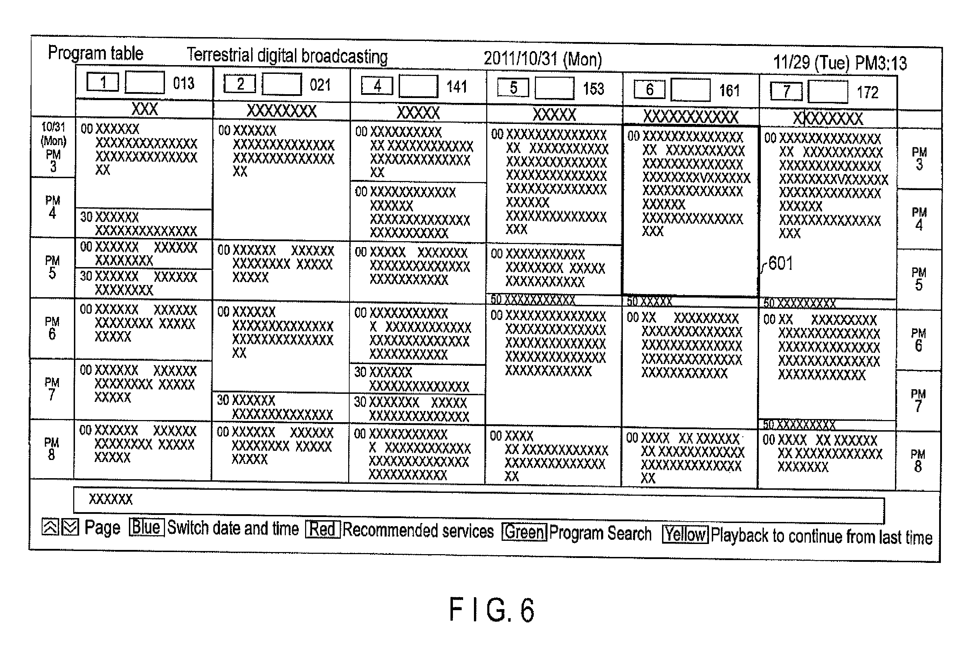

FIG. 6 shows an example of the program table. This program table is a chart showing the programs of the past, and has a plurality of cells provided with a time axis in its vertical (row) direction and a channel axis in its horizontal (column) direction. The past program table may be a user interface by which the user instruct playback of a program.

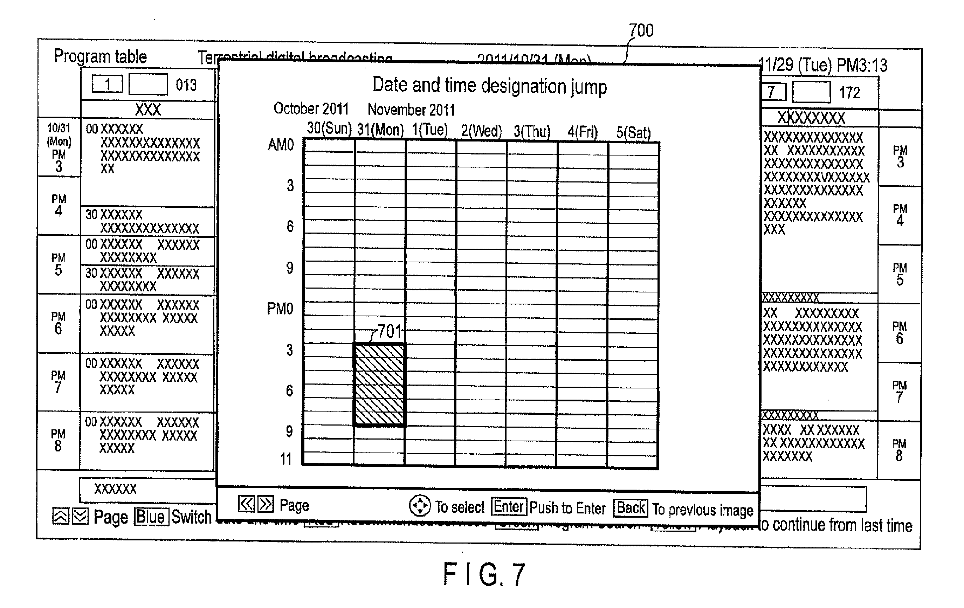

It should be noted that while the program table being displayed, when the user operates, for example, a blue key 300F, the table processing section 115C displays by overlaying the date and time designation jump table 700 on the program table. (See FIG. 7.)

As shown in FIG. 7, the date and time designation jump table 700 has a plurality of cells provided with a time zone axis in its vertical (row) direction and a date axis in its horizontal (column) direction. In the date and time designation jump table 700, a focus (designated cell) 701 which surrounds a time zone of, for example, 6 hours is displayed.

The focus 701 is associated with the program table shown in, for example, FIG. 6. FIG. 6 shows the display of a past program table from 3:00 P.M. to 9:00 PM on October 31, 2011. In this state, when the user operates on, for example, the blue key 300F, the date and time designation jump table 700 overlays on the chart. (See FIG. 7.) The date and time focus 701 shown in FIG. 7 surrounds the cell of the time zone (from 3:00 P.M. to 9:00 PM on October 31, 2011), which is applicable to time axis displayed in the past program table. These associations are carried out based on association data described later.

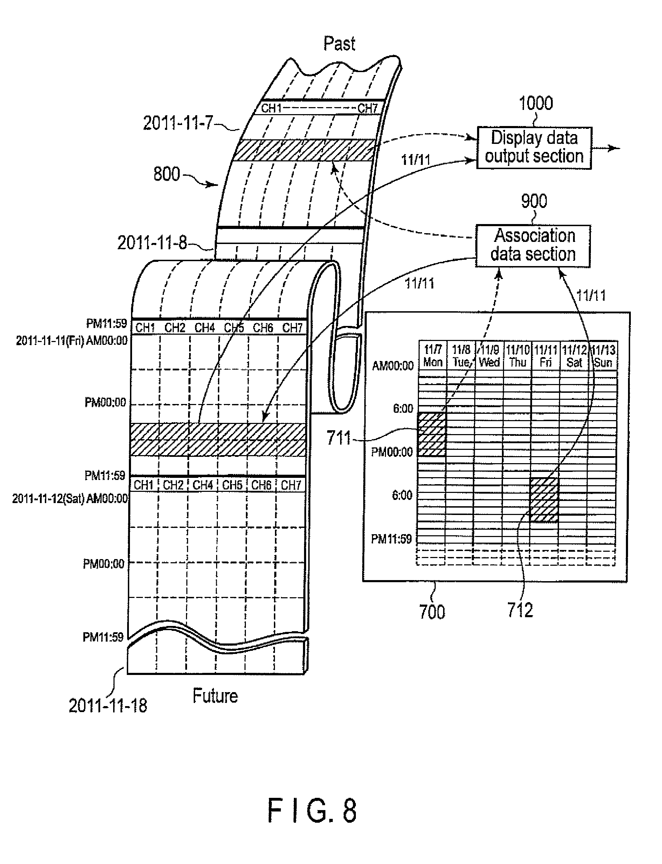

FIG. 8 is a conceptual diagram showing the relationship between the date and time designation jump table 700 and a program table data file 800 of the past, present and future, a part of which can be designated by the date and time designation jump table 700.

The program table data file 800 is generated from program information sent together with the broadcast signal. FIG. 8 shows the present date and time as, for example, November 11 (Friday), 2011. In the case where program information from the present time to, for example, one week from the present is sent, the program table is created up to the information on programs of November 18, (Friday), 2011. In the program table data file 800 shown in FIG. 8, the vertical axis indicates the date and time (the past, present and future), and the horizontal axis indicates channels CH1, CH2, CH4, CH5, CH6 and CH7. Note that the configuration of the program table data file 800 is not limited to this format, but it may take various forms as long as program information exist as a database and an arbitrary part of the program information can be designated by a date and time when the program table is generated.

It depends on the design of the device that how many days of the past program tables are stored. Further, the maximum time period for which the past programs are stored and kept in the recording medium 111 depends on the design of the device. In this device, the past program table can be prepared for displaying as many as the program tables are stored in the recording medium 111.

In the date and time designation jump table 700 shown in FIG. 8, when the cells of the past date and time, from 6:00AM to 12:00PM of November 7 are selected, the cells corresponds to this date and time are focused as indicated by numeral 711. A focus is defined as a state where a cell is highlighted with, for example, a higher brightness than in other parts on the screen, or in a different color from that of the other parts, so that it can be distinguished from the other parts. When the enter key of the remote controller is pressed while in the focus state 711, the program information to obtain the program table (program table from 6:00AM to 12:00PM of November 7) are read out from the program table data file 800 based on the association data in the association data section 900. The read program information are displayed as a program table such as shown in FIG. 6 via a display data output section 1000.

Meanwhile, when the cells of the past date and time, from 3:00PM to 9:00PM of November 11 are selected in the date and time designation jump table 700, the cells corresponds to this date and time are focused as indicated by numeral 712. Then, when the enter key of the remote controller is pressed while in the focus state 712, the program information to obtain the program table (program table from 3:00PM to 9:00PM of November 11) are read out from the program table data file 800 based on the association data in the association data section 900, and are displayed as a program table such as shown in FIG. 6 via the display data output section 1000. As described above, the program table data file 800 and the date and time designation jump table 700 are associated with each other. It should be noted here that the operation method and means for displaying program tables, and the operation method and means for displaying the date and time designation jump table 700 are not limited to the above-described examples, but various types of methods and means can be applied.

The section which processes the above-described date and time designation jump table 700 is, for example, included in the table processing section 115C. On the other hand, the program table data file 800, the association data section 900 and the display data output section 1000 are included in the program information processing section 115D. Note that this configuration is not limited to this, but the data storage location and data processing location can be modified into various versions. Further, the table processing section 115C and the program information processing section 115D may be integrated into a single unit.

As described above, according to this device, a time zone can be designated from the time zone of the oldest past program stored in the device up to that of the program information of the most far future stored in the device by using the date and time designation jump table used to change the time zone displayed on a program table (to jump to another).

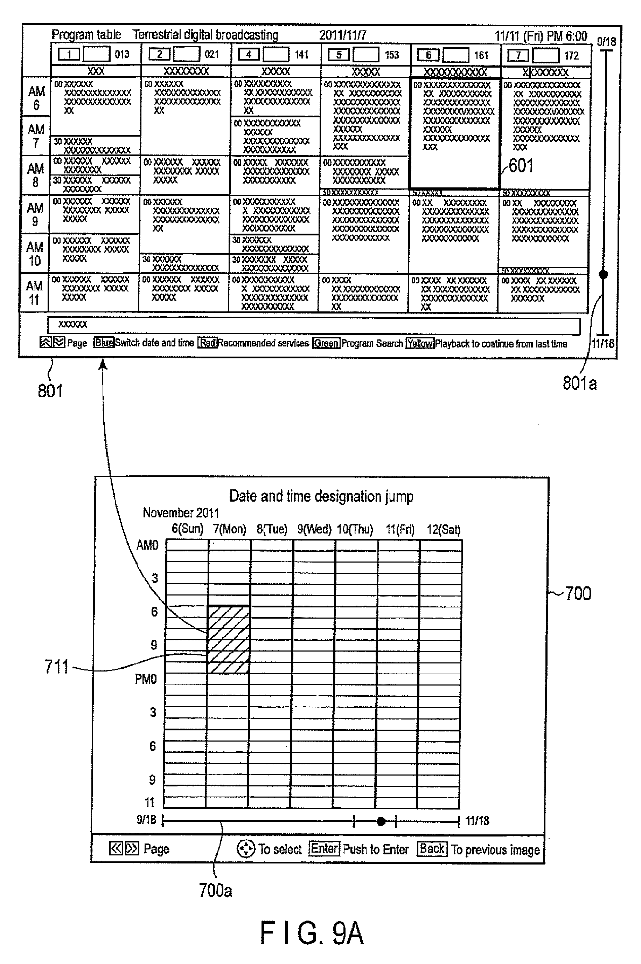

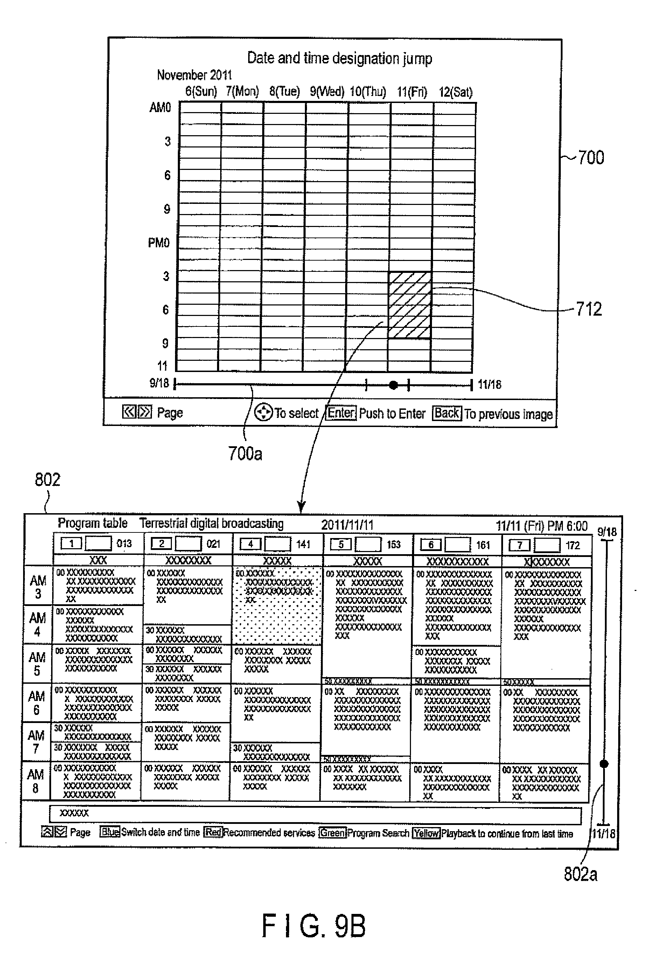

FIGS. 9A and 9B each show an example of a program table displayed with use of the date and time designation jump table 700 as explained with reference to FIG. 8. That is, a program table 801 (FIG. 9A) from 6:00AM to 12:00AM on November 7, 2011 and a program table 802 (FIG. 9B) from 3:00PM to 9:00PM on November 11, 2011 are shown.

In the case where the date and time designation jump table 700, the program table 801 and the program table 802 are displayed, each image further displays an indicator which indicates the date of the most far future and the date of the oldest past of the program information managed by the device. More specifically, the program table 801 and program table 802 show the indicators by reference numerals 801a and 802a, respectively, on their right hand sides. The date and time designation jump table 700 shows its indictor 700a on its bottom side.

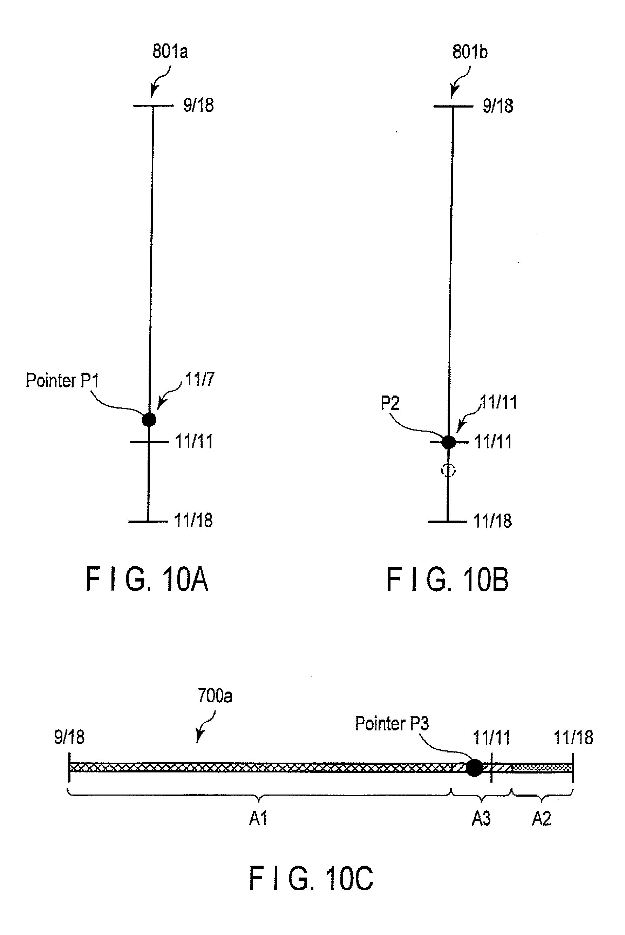

FIGS. 10A, 10B and 10C, respectively, show the above-described indicators 801a, 802a and 700a, extracted. The indicators are expressed in, for example, bars. And the date of the most far future of the program information managed by the device (in this embodiment, November 18) and the date of the oldest past (in this embodiment, September 18) are indicated on the respective ends. Further, the present date (in this embodiment, November 11) is indicated on the bar. Further, on the bar, a pointer (for example, in red) is displayed at the position of the date and time corresponding to the program table currently displayed. That is, on the indicator 801a displayed together with the program table 801(see FIG. 9A), a pointer P1 (see FIG. 10A) is displayed at the position of November 7 (which is in the past with respect to the present date, November 11). And on the indicator 801b displayed together with the program table 802(see FIG. 9B), a pointer P2 (see FIG. 10B) is displayed at the position of November 11 (which is the same as the present date, November 11). Meanwhile, on the indicator 700a (see FIGS. 9A and 9B) displayed together with the date and time designation jump table 700 in the focus state 711 being set, a pointer P3 (see FIG. 10C) is displayed at the position of November 7 (which is in the past with respect to the present date, November 11). Further, as shown in FIG. 10C, the indicator 700a distinguishes parts on the bar by, for example, colors. Basically, the past with respect to the present date is displayed in, for example, black, whereas the future is displayed in, for example, light blue. In addition to the color distinction, a period of a plurality of days indicated on the date and time designation jump table 700 is displayed in, for example, pink. Thus, on the bar, a black area A1, a blue area A2 and a pink area A3 are displayed. When the above-described bar is displayed, calibration markings may be put on the bar at intervals of N days (N is a natural number).

With the above-described indicator displayed, the user is able to grasp the presence of the most far future program information and the most past program information managed in the device by their dates. Further, the user is able to grasp the location of the currently displayed program table on the entire program tables which are able to be expressed by the program table data files.

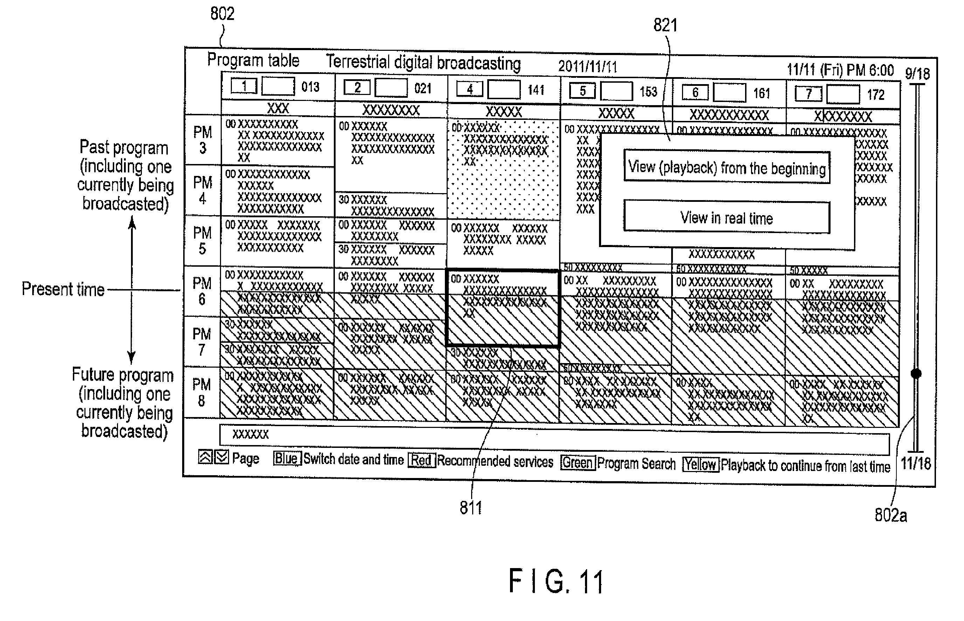

When an arbitrary cell is focused while the date and time designation jump table being displayed as described above, the display processing section obtains an display output of the indicator indicating the position of the focused cell as to where it is located between the most far future date and the most past date managed by the date and time designation jump table. Further, the program table processing section 115 or the program information processing section 115D indicates the period between the most far future date and the most past date of the indicator by a bar. Further, in the bar, a plurality of day zones are distinguished from each other, the plurality of day zones are indicated according to a plurality of dates included in the date and time designation jump table. Here, let us suppose that the indicator is displayed on the bar in the period between the most far future date and the most past date, and a pointer is displayed on the bar. In this state, the program information processing section 115D, when the focus is moved, can move the pointer in synchronous with the focused position. FIG. 11 shows a state where the program table 802 is displayed. Here, supposing that the present time is 6:30PM on November 11, the program table 802 displays program information of the past, present and future. In this case, the program table processing section 115 or the program information processing section 115D indicates the backgrounds of the program information of the past, present and future by different colors on the program table 802. With this structure, the user can easily recognize the programs which have not yet been broadcasted and those already recorded from each other when selecting on the program table 802 a program which the user wishes to view. Further, the user can distinguish programs being currently broadcasted, from the others.

Here, suppose the case, for example, where the user operates on the cursor key of the remote controller to designate the focus 811 and presses the enter key. In this case, the focus 811 is designating a program being currently broadcasted, and therefore a portion of the program has already been recorded in a recording medium.

Then, an inquiry menu 821 pops up. In this menu 821, it is inquired as to whether the selected program should be "viewed from the beginning or "viewed in real time" from the present time.

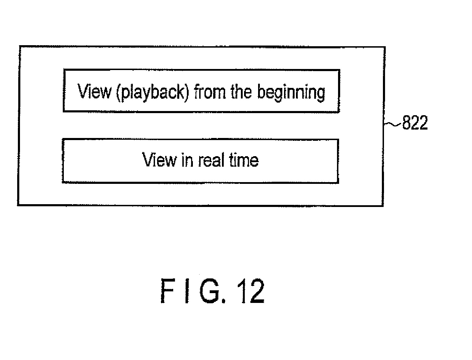

Meanwhile, in some cases, the user, while viewing a program (for example, that designated by focus 811) starts to view another program (another program being currently broadcasted, or another past program). Or even, in some cases, the user stops viewing the other program, displays the program table shown in FIG. 11 once again, and selects the same program once again. In this case and when the program selected once again is being currently broadcasted, an inquiry menu 822 such as shown in FIG. 12 pops up. In this menu 822, it is inquired as to whether the selected program should be "viewed from the continuing part from the last time" or "viewed in real time" from the present time. In other words, this device comprises the resume function for playback in order to obtain the continuity when viewing a program.

Next, various types of functions regarding the date and time designation jump table 700 will now be described.

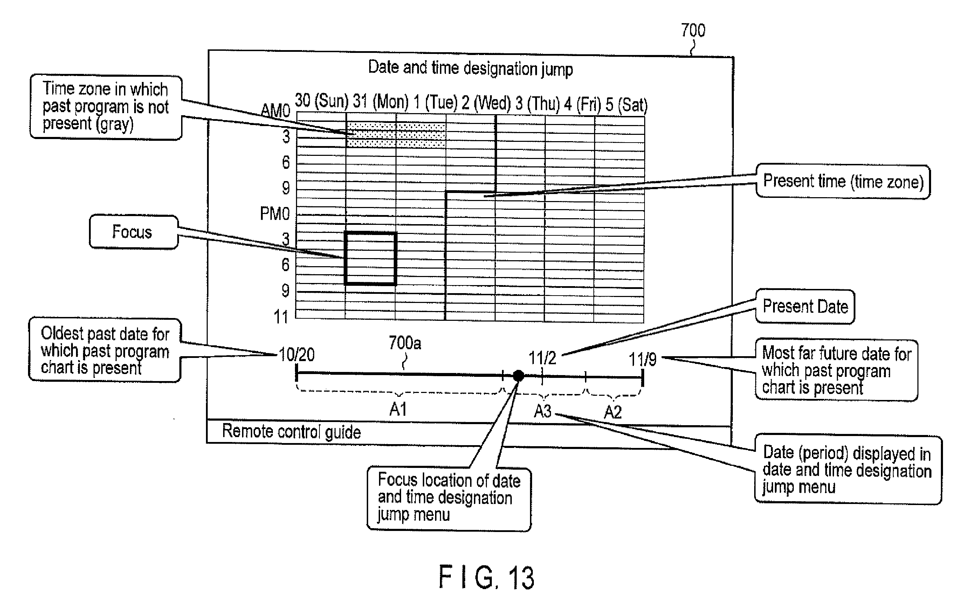

The date and time designation jump table 700 shown in FIGS. 13 to 16 will be described supposing that the present time zone is, for example, between 9 and 10 o'clock on November 2, 2011. It is also supposed that the most far future date of the program information managed by the device is November 9, 2011 and the most past date is October 20, 2011.

Although these drawings are not illustrated in colors, cell groups of the date and time designation jump table 700 are differentiated in different colors in area unit of 6 hours. Further, the past time zone and future time zone are distinguished by dark color and light color (or vice versa). In this manner, when the focus (to designate a cell group of 6 hours) is moved, it can be easily detected as to whether the focus is located in the past time zone, or in the future time zone. The location of the focus is displayed at, for example, a high brightness. Further, the present time zone is indicated in the unit of cell and displayed at, for example, a high brightness (highlighted). The cells of the time zones where the past programs are not recorded are displayed in, for example, gray.

Further, within an image of the date and time designation jump table 700, the indicator 700a (see FIG. 10(C)) explained before is displayed. The indicator 700a has some colored zones which are distinguished by color on the bar. For example, the past from the present day is displayed in black, whereas the future is displayed in blue. In addition to this color distinction, a period of a plurality of days shown on the date and time designation jump table 700 is displayed in, for example, pink. Therefore, on the bar, a black area, a blue area and a pink area are displayed. Further, a pointer P3 is displayed on the bar. The location of the pointer P3 corresponds to the position of the focus state on the date and time designation jump table 700.

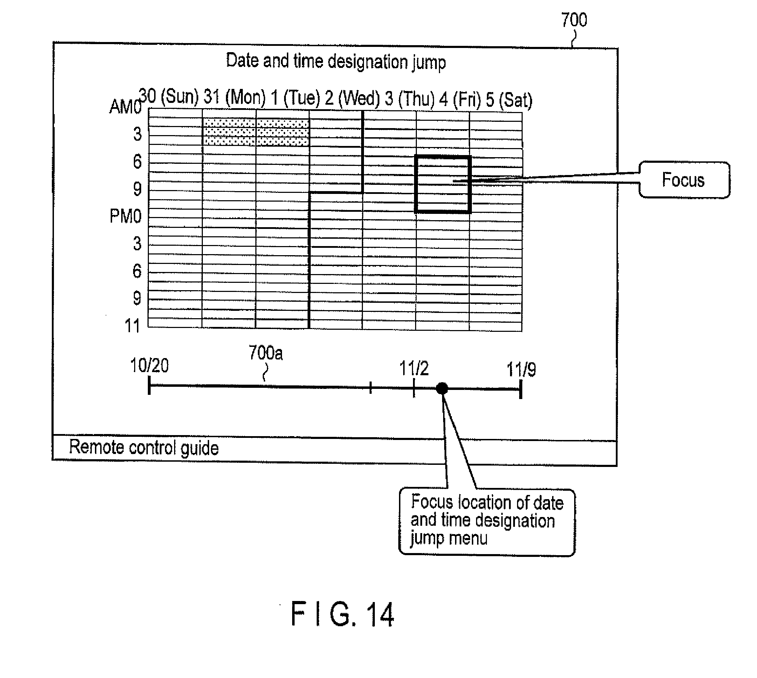

FIG. 14 shows a state in which the focus designates cells from 5:00AM to 11:00AM on November 4 (for 6 hours). In the date and time designation jump table 700, the past and future are distinguished by the difference in darkness of color, and therefore the use is able to immediately understand that the location of the focus is in future.

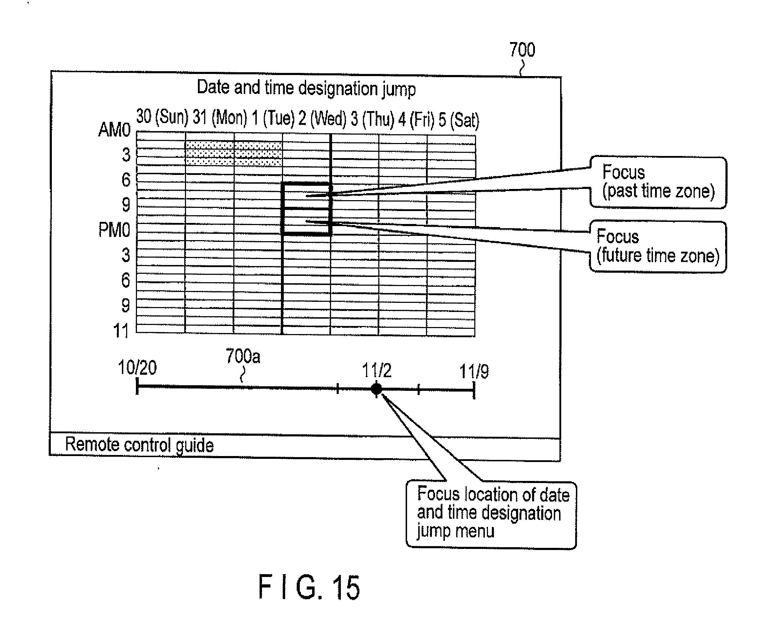

FIG. 15 shows a state in which the focus covers a group of cells from the past time zone through the future time zone. In this case, the pointer P3 moves to the location of the present date and time (November 2). More specifically, the pointer moves on the bar to follow the focus. That is, the pointer synchronizes with the focus.

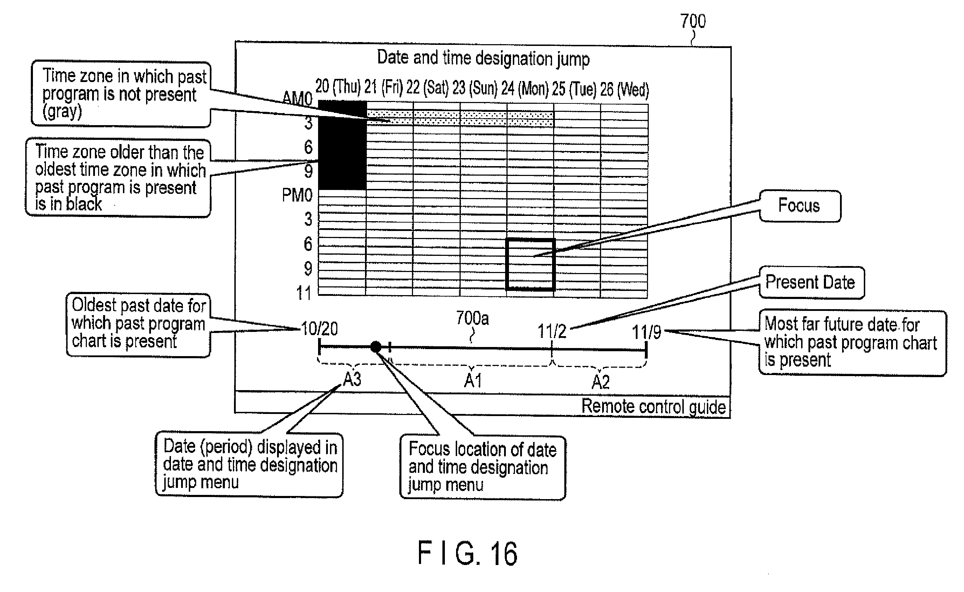

FIG. 16 shows an example in which the display area displayed by the date and time designation jump table 700 is switched from October 20 to the range of October 26. In this case, as well, the pointer P3, the black area A1, the blue area A2 and the pink area A3 are displayed on the bar of the indicator. With this indication, the user can instantaneously grasp what zone is displayed by the date and time designation jump table 700 between the most far future date (November 2) of the program information managed by the device is and the most past date (October 20). Here, the cells of the time zones where the past programs are not recorded are display in gray. Further, a black region of cells is appeared. The time zones of a block region is older (more past) than the oldest time zone in which the past program is present. It is alternatively possible to set such that the focus cannot be moved to the above-mentioned black region. It is further alternatively possible that when the focus is in the gray region, the color of the focus changes. Further, the portion of the focus may blink.

### <Jumping state of display area which can be displayed by the date and time designation jump table>

In this device, the display area displayed by the date and time designation jump table 700 can be greatly jumped at once by operating a particular key of the remote controller or the user terminal. More specifically, the program information processing section 115D can perform a jump process to change a display area displayed by the date and time designation jump table, in dates and times continuous within a certain range, all at once by a predetermined operation entry.

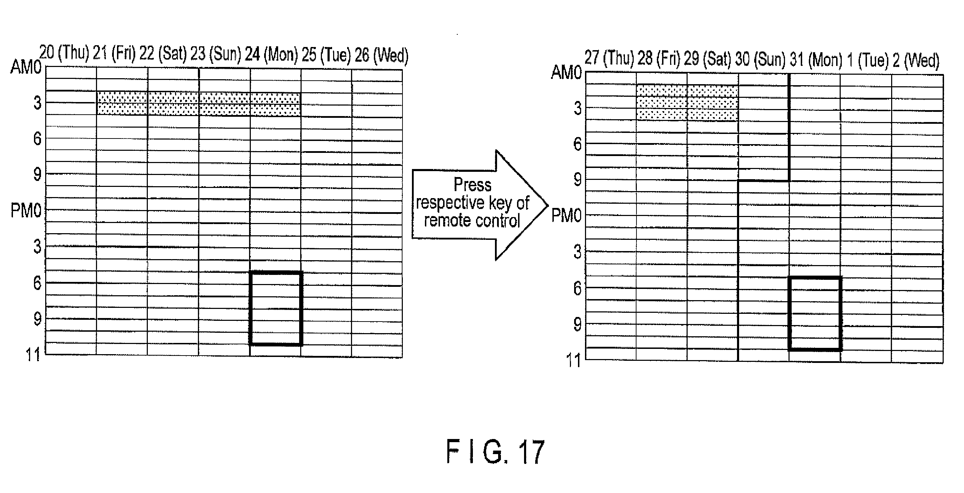

FIG. 17 shows an example in which the display area displayed by the date and time designation jump table 700 is shifted from there to an area one week future. This figure shows an example in which the display area from October 20 to October 26 is shifted to the display area from October 27 to November 2.

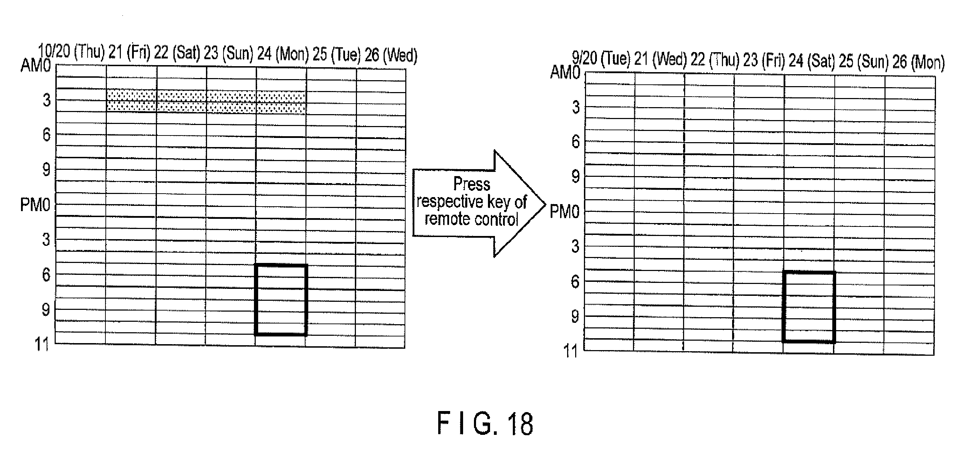

FIG. 18 shows an example in which the display area displayed by the date and time designation jump table 700 is shifted to an area one month past thereof. This figure shows an example in which the display area from October 20 to October 26 is shifted to the display area from September 20 to September 26.

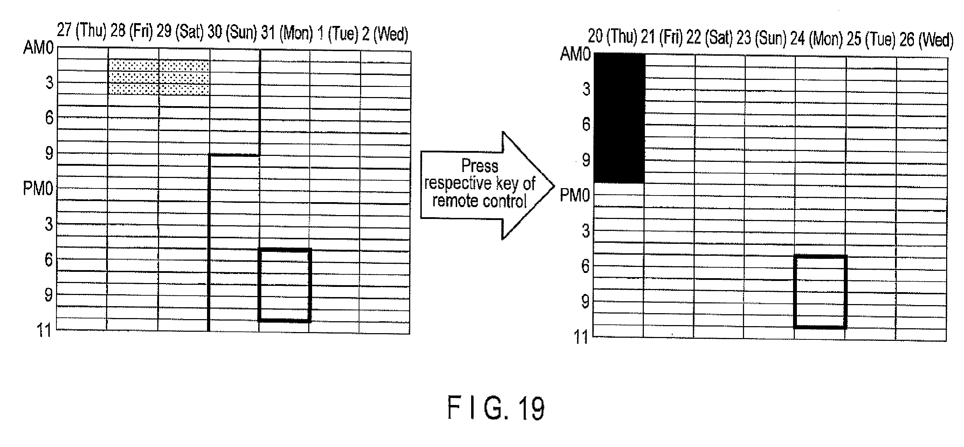

FIG. 19 shows an example in which the display area displayed by the date and time designation jump table 700 is shifted to an area which includes the oldest date of the past program (, which is September 20, 2011 in FIG. 19). This figure shows an example in which the display area from October 27 to November 2 is shifted to the display area from September 20 to September 26.

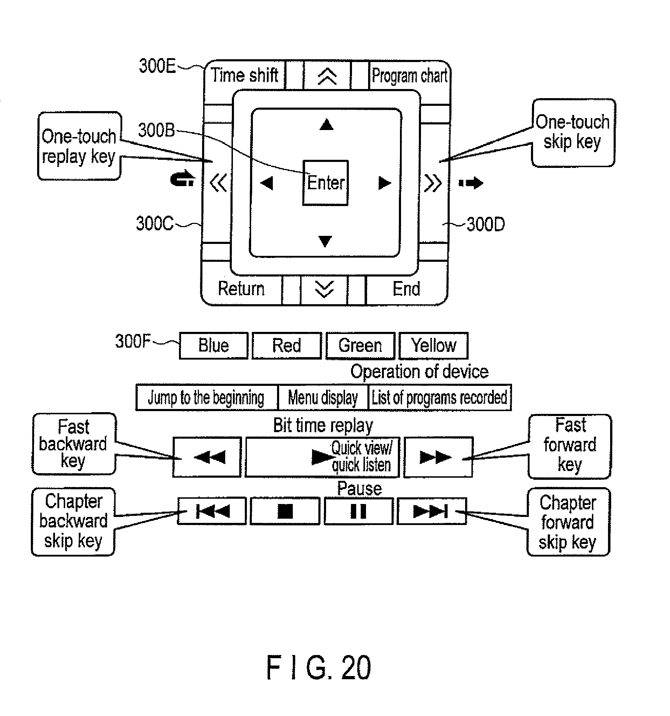

FIG. 20 shows a portion extracted from the operation keys of the remote controller. When a one-touch skip key 300D is pressed, the date of the date and time designation jump table 700 moves (or jumps) ahead by one week to the future (an example thereof shown in FIG. 17). When a one-touch replay key 300C is pressed, the date of the date and time designation jump table 700 moves back (or jumps) by one week to the past.

For example, if a fast forward key is pressed while displaying the date of the date and time designation jump table, the date of the date and time designation jump table 700 moves (or jumps) ahead by one month to the future. Or, if a fast backward key is pressed, the date of the date and time designation jump table 700 moves back (or jumps) by one month to the past (an example thereof shown in FIG. 18).

For example, if a chapter forward skip key is pressed while displaying the date of the date and time designation jump table, the date of the date and time designation jump table jumps to the date of the most far future program. Or if a chapter backward skip key is pressed while displaying the date of the date and time designation jump table, the date of the date and time designation jump table moves back (or jumps) to the date of the oldest past program (an example thereof shown in FIG. 19).

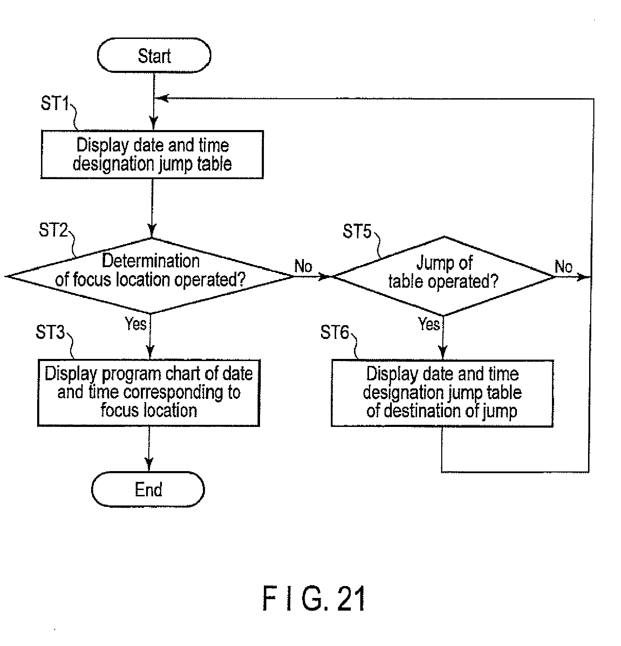

FIG. 21 is a flowchart of operations carried out mainly by a display processing section in this embodiment, and shows an example of the use mode of the date and time designation jump table. When the focus location is determined while displaying the date and time designation jump table and the determination is operated, the program table of the date and time corresponding to the focus location is displayed (Steps ST1, ST2 and ST3). Then, in step ST5, when the operation of jumping in the table is carried out (as explained in FIGS. 17 to 19), the date and time designation jump table of the destination of the jump is displayed, and the operation moves back to step ST1 (steps ST5 and ST6).

Note, the name of "the date and time designation jump table" is not limited to in this words, it may be referred to as a jump table, a table, a referring table, or an association table.

## Claims

1. A program table control device **characterized by** comprising:
a table processing section (115C) configured to process a jump table comprising a plurality of cells distinguished from each other based on date and time information which indicates a plurality of dates of the past, present and future and times thereof; and
a program information processing portion (115D) configure to display the jump table and when an arbitrary one of the plurality of cells is selected by an operation means, outputs a program table which indicates a program of the past, the future, the past and present, the present and future, or the past, present and future, associated with the arbitrary cell based on association data.

2. The program table control device of claim 1, **characterized in that** the program information processing portion (115D) controls to display a distinguished state of each of the cells on the jump table, to be that of the past, present or future.

3. The program table control device of claim 2, **characterized in that** the program information processing portion (115D) distinguishes the cells on the jump table from each other by difference in color or darkness or lightness in color.

4. The program table control device of claim 1, **characterized in that** the program information processing portion (115D) controls to display the jump table and when an arbitrary one of the cells is focused, obtains a display output of an indicator which indicates where the focused cell is located between the most far future date and the most past day managed by the data and time designation jump table.

5. The program table control device of claim 4, **characterized in that** the program information processing portion (115D) controls to display a duration between the most far future date and the most past day of the indicator by a bar, and distinguishes in the bar a plurality of date zones displayed by the jump table.

6. The program table control device of claim 4, **characterized in that** the program information processing portion (115D) controls to display the indicator by a bar of a duration between the most far future date and the most past day, and controls to display the focused location on the jump table by a pointer on the bar, and moves the pointer in synchronism with the location of the focus.

7. The program table control device of claim 1, **characterized in that** the program information processing portion (115D) controls to display a display area of the jump table by dates and times continuous within a certain range, and carries out a jump process to switch the display area at once.

8. The program table control device of claim 7, **characterized in that** the jump process to switch the display area at once jumps to one of a display area where the date and time jumps by one week, a display area where the date and time jumps by one month, a display area of the dates and times containing the oldest program table location, and a display area of the dates and times containing the most far future program table location.

9. The program table control device, **characterized in that** the program information processing portion (115D) displays the program table and obtains a display output of an indicator which indicates where the program table displayed is located between the most far future date and the most past date managed by the jump table.

10. The program table control device of claim 4, **characterized in that** the program information processing portion (115D) controls to display the indicator by a bar of a duration between the most far future date and the most past day, and displays the focused location on the program table by a pointer on the bar, and moves the pointer in synchronism with the location of the focus.

11. A program table control method for a device which processes a jump table comprising a plurality of cells distinguished from each other based on date and time information which indicates a plurality of dates over the past, present and future and times thereof, and a program table data file comprising program information of a plurality of dates over the past, present and future, the method **characterized by**:
displaying, when an arbitrary one of the cells is focused, an indicator which indicates where the focused cell is located between the most far future date and the most past day managed by the data and time designation jump table; and
creating, when the determination operation is carried out by operation means while the arbitrary one of the cells being focused, a program table which indicates a program of the past, the future, the past and present, the present and future, or the past, present and future, associated with the arbitrary cell using a program table data file.
